# EUROPEAN PATENT SPECIFICATION

(11) **EP 3 353 952 B1**
(45) Date of publication and mention of the grant of the patent: **05.05.2021**
(21) Application number: 16888511.9
(22) Date of filing: 29.01.2016
(51) Int. Cl.: H04L 12/24, H04L 12/26, H04L 29/06, H04L 29/08

(54) **MANAGING GROUPS OF SERVERS**
VERWALTUNG VON SERVERGRUPPEN
GESTION DE GROUPES DE SERVEURS

(43) Date of publication of application: 01.08.2018
(73) Proprietor: Hewlett Packard Enterprise Development LP, Houston, TX 77070 (US)
(72) Inventor: SHIVANNA, Suhas, Bangalore Karnataka 560048 (IN); THOMAS, Mathews, Bangalore Karnataka 560048 (IN); R, Sahana, Bangalore Karnataka 560048 (IN); HANSEN, Peter, Houston, Texas 77070 (US); BANGALORE HARSHAVARDHANA, Sandeep, Bangalore Karnataka 560048 (IN)
(74) Representative: Haseltine Lake Kempner LLP
(86) International application number: PCT/US2016/015824
(87) International publication number: WO 2017/131783

(56) References cited:
- WO-A1-2005/120102
- US-A1- 2008 262 824
- US-A1- 2013 133 023
- US-A1- 2013 326 028
- US-A1- 2014 006 597
- US-A1- 2015 288 569
- US-A1- 2015 304 327
- US-B2- 8 160 063

## Description

### BACKGROUND

Groups of servers are generally managed by coordinating and monitoring operations across the servers and network devices to provide secure data processing capabilities to users. The servers are clustered into different groups for ease of administration and management. A group generally includes a large number of servers to process data received from the users.

For conducting an operation within the group, a user may log onto any server within the group and may execute the operation on the server. Thereafter, the user may also transmit a message through the server to other servers of the group based on peer to peer messaging for execution of the operation on the other servers.

WO2005/120102 discloses Dynamic Connection Structures (DCS) utilizing many topologies and routing means and methods for transferring data files to pluralities of computers or nodes on a network. Many types of meshes, graphs, rings, and ordered binary tree algorithms are disclosed which are configured to adapt and change their topologies and routing schemes in peer-to-peer architectures, depending upon a number of significant attributes of the nodes, including their relative positions, capacities, content status, and their respective relationships to other nodes in the DCS. At least one traffic cop node is arranged and enabled for overseeing, adapting and maintaining the topology of the DCS. Advantageously, nodes of the invention are adapted for simultaneously sending and receiving chunks of a file set transmitted over the DCS. Additions and removals of nodes can be achieved at any time by contacting affected nodes, and modifying their connections to reflect the changes determined by the algorithm. Thus, nodes are adapted for efficiently changing their topologies and for routing content between and among the nodes of the DCS.

US2013/133023 discloses a method comprising receiving an access request, from an authenticator device, to grant a supplicant device access to a data network; transmitting the access request to an authentication server; after sending a response that the access request was granted, updating a trust topology map by including in the trust topology map information that has been obtained from the response and that indicates a secure link between the authenticator device and the supplicant device, and causing displaying the updated trust topology map as a logical map depicting one or more network devices and roles assigned to the one or more network devices; wherein the method is performed by one or more computing device.

US2008262824 discloses that operational resource modeling is usable to analyze application and computer system performance over a wide range of hypothetical scenarios. Operational resource modeling involves creating and training one or more resource models, and/or simulating hypothetical scenarios using resource models.

### BRIEF DESCRIPTION OF THE DRAWINGS

The detailed description is provided with reference to the accompanying figures. In the figures, the left-most digit(s) of a reference number identifies the figure in which the reference number first appears. The same numbers are used throughout the drawings to reference like features and components.
Fig. 1 illustrates an example network environment, implementing a central management system, according to an implementation of the present subject matter;
Fig. 2 is a schematic representation of a central management system, in accordance with an implementation of the present subject matter;
Fig. 3 is a schematic representation the central management system, according to an implementation of the present subject matter;
Fig. 4 illustrates an example method for managing servers by a central management system, according to an implementation of the present subject matter; and
Fig. 5 illustrates an example computing environment, implementing a non-transitory computer-readable medium storing instructions for executing an operation on servers within a group, according to an implementation of the present subject matter.

### DETAILED DESCRIPTION

Generally, techniques of managing servers, for instance within data centers, involve determining interconnection of servers in a group and generating a topology map based on the interconnection. The topology map is then utilized for executing multiple operations across the servers of the group. The multiple operations can be of different types and may have distinct characteristics, like being performance sensitive or time and latency sensitive.

However, all operations are executed on servers of a group based on the topology map, which may not be capable of managing multiple operations of distinct characteristics. In other words, executing multiple operations based on a single topology map can be time consuming and inefficient and may impact performance of the servers and the network. Also, changes in network parameters of network links and the servers during dynamic run-time conditions may impact execution of the operations, thereby affecting overall performance and quality of service offered by the group of servers.

In accordance with an implementation of the present subject matter, techniques for managing servers within different groups, through a central management system (CMS), are described. The CMS may facilitate automated supervision and management of the servers by clustering the servers into different groups, generating multiple topologies of network links and the servers of a group, and orchestrating operations between the servers based on the multiple topologies.

In an implementation of the present subject matter, the CMS may identify a server based on information associated with the server and assign the server to a group. The group may include a set of servers with each server having a common attribute from a set of attributes. The common attribute may be utilized by the CMS for clustering each server into the group.

For example, each server may be accessible by utilizing a common access credential that may be used to cluster the server into the group. The common access credential may be understood as access credentials utilized by a user to access the server. For ease of explanation, the set of attributes have been referred to as grouping information, hereinafter.

In an implementation, the CMS may assign the server to the group based on analysis of the grouping information associated with the server. The analysis may include comparing, by the CMS, the grouping information with a criteria of grouping, also referred to as predefined grouping policy, and thereafter assigning the server to the group based on the comparison.

After assigning the group, the CMS may determine a layout of the servers in the group and interconnections between the servers through different network links within the group to generate topology maps. In an implementation, the CMS may define the layout and the interconnections based on capability of the network links and the servers in executing different types of operations to generate multiple node topology maps.

It would be noted that each operation may have a different characteristic based on type of resources to be utilized for executing the operation. Therefore, in an implementation of the present subject matter, each node topology map from the multiple node topology maps may be defined based on a characteristic of operation.

In an implementation of the present subject matter, the multiple node topology maps may be transmitted to servers in the group. The node topology maps may define configuration of the servers and the interconnections through the network links and enable communication between the servers based on different topologies. For example, for performance intensive operations, a performance topology map may include 5 different servers, capable of handling performance intensive operations. Similarly, for latency sensitive operations, a latency sensitive topology map may be generated which may include 3 separate servers, interconnected to minimize latency during execution of operations.

Thereafter, the CMS may assign an operation to the group for execution. In an example, the CMS may determine characteristic of the operation and select a node topology map from the multiple node topology maps based on the characteristic. For example, the CMS may determine an operation to be computationally intensive, thereby may choose performance sensitive node topology for execution of the operation. The CMS may generate a message including an instruction to execute the operation and communicate the message to any one of the servers corresponding to the performance sensitive node topology map.

The server may forward the message to other servers for execution of the operation based on the node topology map. Thus, the techniques provide an automated and a scalable process of grouping servers, generating multiple node topology maps, and selecting a node topology map for execution of the operation based on characteristic of the operation. Further, the techniques facilitate execution of the operation in a resource efficient and a time efficient manner.

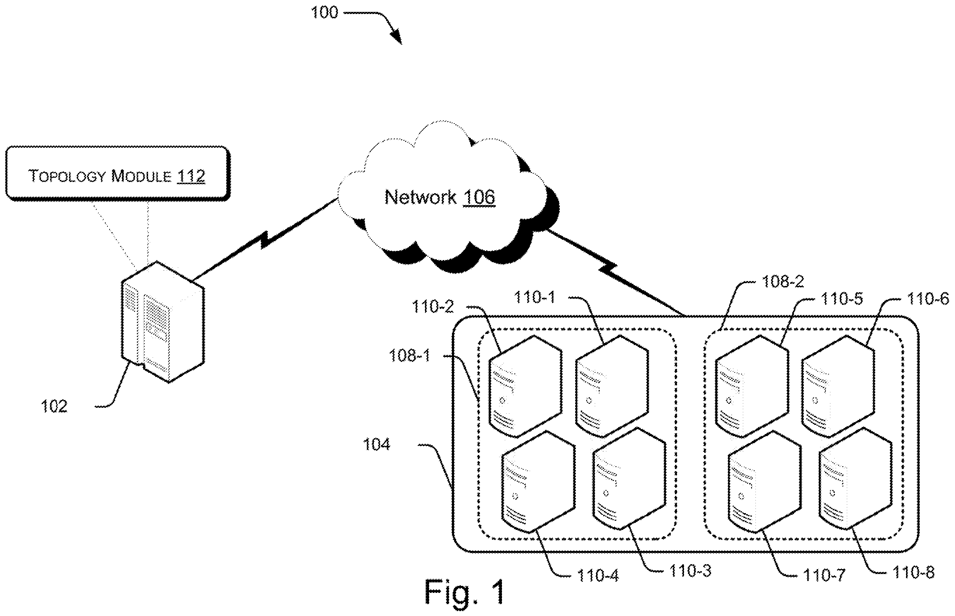

Fig. 1 illustrates a network environment 100 according to an implementation of the present subject matter. The network environment 100 may either be a public distributed environment or may be a private closed network environment. The network environment 100 may include a central management system (CMS) 102, communicatively coupled to a data center 104 through a network 106. The data center 104 may include different groups, such as group 108-1 and 108-2.

The group 108-1 may include servers 110-1, 110-2, 110-3 and 110-4 and the group 108-2 may include servers 110-5, 110-6, 110-7 and 110-8. For sake of explanation, the servers 110-1,...., 110-8 have been commonly referred to as servers 110 hereinafter. Further, the CMS 102 may include a topology module 112 for generating multiple node topology maps for the groups 108-1 and 108-2.

In an implementation of the present subject matter, the CMS 102 may be implemented as a server for managing multiple data centers including the data center 104. In another implementation, the CMS 102 may be implemented as a desktop or a laptop, on which an application may be deployed to perform different management operations.

In an implementation of the present subject matter, the network 106 may be a wireless or a wired network, or a combination thereof. The network 106 can be a collection of individual networks, interconnected with each other and functioning as a single large network (e.g., the internet or an intranet). Examples of such individual networks include, but are not limited to, Global System for Mobile Communication (GSM) network, Universal Mobile Telecommunications System (UMTS) network, Personal Communications Service (PCS) network, Time Division Multiple Access (TDMA) network, Code Division Multiple Access (CDMA) network, Next Generation Network (NGN), Public Switched Telephone Network (PSTN), and Integrated Services Digital Network (ISDN). Depending on the technology, the network 106 includes various network entities, such as transceivers, gateways, and routers; however, such details have been omitted for ease of understanding.

In an implementation, groups 108-1 and 108-2 may include cluster of servers located across different racks or aisles of the data center 104. The groups 108-1 and 108-2 may include different number of servers with each server having varied capabilities of executing operations.

The servers 110 may be implemented as web servers to provide online content, application servers to process application for users, and data servers to process data for the users. In an implementation, the servers 110 may be implemented as desktops, mobile devices, and laptops, on which an application may be deployed to perform different operations.

In an example, the CMS 102 may be located externally from the data center 104 for automated supervision and management of the servers 110. The CMS 102 may perform various functions to manage the servers 110 within the groups 108-1 and 108-2, and execute operations across the servers 110. For example, the CMS 102 may cluster the servers 110 into different groups 108-1 and 108-2, configure new servers in the groups 108-1 and 108-2, remove failed servers from the groups 108-1 and 108-2, and provide instructions for executing operations across the servers 110.

In an implementation of the present subject matter, for clustering a server into a group, the CMS 102 may identify a server within the data center 104 based on information associated with the server. The information may be referred to as identification information and may include an Internet Protocol (IP) address, and a Media Access Control (MAC) address of the server. Thereafter, the CMS 102 may assign the server to the group 108-1 within the data center 104.

In an example, the CMS 102 may assign servers 110, distributed across the data center 104, to different groups for administration, and for hosting different applications to serve different user segments. For instance, the group 108-1 may host applications to provide support for healthcare and medical related operations and the group 108-2 may host applications to provide support for tours and travels related operations.

In an implementation, the topology module 112 of the CMS 102 may determine a layout and interconnections between the servers 110 through network links within the group 108-1. It would be noted that, the layout may indicate distribution of the servers 110 with respect to each other within the data center 104 and the network links can be a wireless connection or a wired connection between the servers 110. Each network link may include multiple network devices, such as switches and routers that enable communication between the servers 110.

In an implementation, the topology module 112 may also generate multiple node topology maps for the group 108-1. In an illustrative example, a first node topology map may be generated for the group 108-1. In the first node topology map, the server 110-2, and the server 110-3 may be peer servers of the server 110-1, and the server 110-4 may be a peer server of the server 110-3. As per a second node topology map, the servers 110-2 and 110-3 may be peer servers of the server 110-4 and the server 110-1 may be a peer server of the server 110-2.

After generating the multiple node topology maps, the topology module 112 may transmit the multiple node topology maps to the servers 110 of the group 108-1 for network configuration. In an example, the multiple node topology maps may be transmitted through a unicast message to the servers 110 of the group 108-1.

The detailed explanation of the functionalities of the CMS 102 has been further explained in conjunction with description of forthcoming figures.

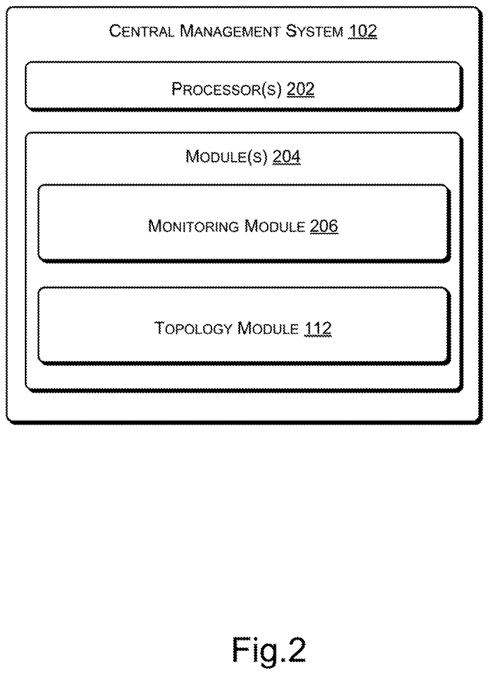

Fig. 2 schematically illustrates components of the Central Management System (CMS) 102, according to an implementation of the present subject matter. In an implementation of the present subject matter, the CMS 102 may include a processor 202 and module(s) 204.

The processor 202 may be implemented as microprocessors, microcomputers, microcontrollers, digital signal processors, central processing units, state machines, logic circuitries, and/or any devices that manipulate signals based on operational instructions. Among other capabilities, the processor(s) 202 may fetch and execute computer-readable instructions stored in a memory. The functions of the various elements shown in the figure, including any functional blocks labeled as "processor(s)", may be provided through the use of dedicated hardware as well as hardware capable of executing machine readable instructions.

The module(s) 204 may include routines, programs, objects, components, data structures, and the like, which perform particular tasks or implement particular abstract data types. The module(s) 204 may further include modules that supplement functioning of the CMS 102, for example, services of an operating system. Further, the module(s) 204 can be implemented as hardware units, or may be implemented as instructions executed by a processing unit, or by a combination thereof.

In another aspect of the present subject matter, the module(s) 204 may be machine-readable instructions which, when executed by a processor, may perform any of the described functionalities. The machine-readable instructions may be stored on an electronic memory device, hard disk, optical disk or other machine-readable storage medium or non-transitory medium, In one implementation, the machine-readable instructions can be also be downloaded to the storage medium via a network connection.

The module(s) 204 may perform different functionalities which may include, monitoring status of the groups 108-1, and 108-2, updating a node topology map, and transmitting an updated node topology map to the servers 110. Accordingly, the module(s) 204 may include, apart from the topology module 112, a monitoring module 206.

In an implementation, the monitoring module 206 may monitor the status of servers in the groups 108-1, and 108-2, and the network links between the servers 110 within the data center 104. The monitoring module 206 may monitor one of addition of a new server to the group 108-1, removal of an existing server from the group 108-1, a change in interconnection between two servers of the group 108-1, failure of the existing server, and a change in grouping information of a server of the group 108-1.

Further, the monitoring module 206 may monitor a change in load and processing capability of the servers 110, change in load of servers 110, performance of servers 110, and communication bandwidth of the network links during run-time conditions.

In an implementation of the present subject matter, the topology module 112 may determine the layout and interconnection of the servers 110 of the group 108-1 as described earlier. Thereafter, the topology module 112 may generate the multiple node topology maps based on the layout and the interconnection of the servers 110 of the group 108-1.

Further, the topology module 112 may select a node topology map from the multiple node topology maps based on characteristic of the operation to be executed by servers 110 of the group 108-1. In an implementation, the topology module 112 may update the multiple node topology maps to generate multiple updated node topology maps, as described earlier, and transmit the multiple updated node topology maps to servers 110 with changed interconnections, referred to as affected servers hereinafter.

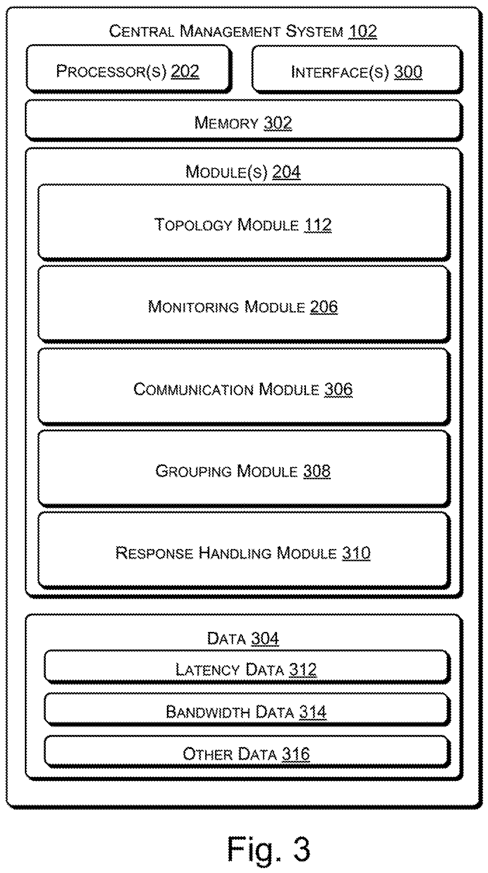

Further, the details of the functionalities of different components of the CMS 102 have been explained in conjunction with description of Fig.3.

Fig. 3 illustrates components of the CMS 102, according to an implementation of the present subject matter. In an implementation of the present subject matter, the CMS 102 may include, apart from the processor 202 and module(s) 204, interface(s) 300, a memory 302, and data 304. Further, the module(s) 204 may also include a communication module 306, a grouping module 308 and a response managing module 310. Furthermore, the data 304 may include latency data 312, bandwidth data 314, and other data 316.

The interface(s) 300 may include a variety of machine readable instructions-based interfaces and hardware interfaces that allow the CMS 102 to interact with different entities, such as the processor 202, and the module(s) 204. Further, the interface(s) 300 may enable the components of the CMS 102 to communicate with other management systems and servers 110. The interfaces 300 may facilitate multiple communications within a wide variety of networks and protocol types, including wireless networks, wireless Local Area Network (WLAN), RAN, satellite-based network, etc.

The memory 302 may be coupled to the processor 202 and may, among other capabilities, provide data and instructions for generating different requests. The memory 302 can include any computer-readable medium known in the art including, for example, volatile memory, such as static random access memory (SRAM) and dynamic random access memory (DRAM), and/or nonvolatile memory, such as Read only Memory (ROM), erasable programmable ROM, flash memories, hard disks, optical disks, and magnetic tapes.

In operation, the monitoring module 206 may identify a server within the data center 104 based on the identification information associated with the server. The server may either be a newly deployed server within the data center 104, or a server migrated from another group within the data center 104, or generally any server not configured within the data center 104.

As described earlier, the identification information may include the IP address, and the MAC address of the server. The server may be referred to as an identified server hereinafter. In an example, the monitoring module 206 may be communicatively coupled to an address server that may issue IP address to the identified server. For instance, the monitoring module 206 may be coupled to a Dynamic Host Configuration Protocol (DHCP) server that issues IP addresses to new servers deployed within the data center 104.

In the example, the DHCP server may issue the IP addresses to the new servers and provide the IP addresses to the monitoring module 206. The DHCP server may also maintain a record of IP addresses of servers 110 that are active within the data center 104, and discard IP addresses of failed servers or servers removed from the data center 104. The DHCP server may then update the record and provide updated record to the monitoring module 206.

In an implementation of the present subject matter, the grouping module 308 may refer to a predefined grouping policy and assign the identified server to a group. The predefined grouping policy may define different criteria based on which a server may be assigned to a group. For example, the predefined policy may define a range of IP addresses for servers that can be grouped into one group and a server with an IP address within the range may be assigned to the group. Further, the predefined grouping policy may also define an access credential common to the servers and location information of the servers as criteria for assigning the identified server into the group.

Thereafter, the grouping module 308 may determine grouping information associated with the identified server and compare the grouping information with the predefined grouping policy to assign the identified server to a group. For example, the grouping module 308 may determine an access credential of the identified server and compare the access credential with the predefined grouping policy. Based on the comparison, the grouping module 308 may identify a group with servers having the same access credential and may assign the identified server to the group.

In an implementation, the grouping information may be stored within the identified server. For example, the access credential, such as a username and a password associated with the identified server may be stored within the server. In an implementation of the present subject matter, the grouping information may include, apart from the access credentials, the IP address of the identified server, location information of the identified server, proximity of the identified server with other servers 110, and a user-provided instruction.

In an example, the location information may include information about a rack and an aisle where the rack is located. For example, the location information associated with the identified server may indicate that the identified server is located at third rack, and in second aisle of the data center 104. In an aspect of the present subject matter, the location information may be obtained by utilizing a location discovery service by the CMS 102 and utilized to group servers located around a common location into one group.

The proximity of the identified server with other servers 110 may indicate a physical proximity of the identified server to other servers 110, which may be utilized by the grouping module 308, to assign the identified server into a group. For example, if the identified server is determined to be close to the servers 110-2 and 110-4, then the grouping module 308 may assign the server to the group 108-1.

In an example, a user may provide instructions to assign the identified server to a group. For example, the user may provide instructions to assign servers capable of processing data and application related to healthcare into one group. In such situation, the grouping module 308 may assign the identified server to a group based on user-provided instructions.

For the sake of clarity, identification and grouping of the identified server has been explained in reference to an illustrative example. In the illustrative example, the server 104-4 may be a newly provisioned server within the data center 104. The DHCP server of the data center 104 may lease an IP address to the server 110-4 and provide the IP address to the monitoring module 206. The monitoring module 206 may then identify the server 110-4 to be present within the data center 104 based on the leased IP address. Thereafter, the grouping module 308 may determine the access credential for accessing the server 110-4 and may compare the access credential of the server 104-4 with the predefined grouping policy to identify the access credential to be common to that of the group 108-1. Accordingly, the grouping module 308 may assign the server 110-4 to the group 108-1. It would be noted that other servers within the group 108-1, such as servers 110-1, 110-2, and 110-3 may also include the same access credential, as that of the server 104-4, such that the group 108-1 has a common access credentials.

In an implementation, after the server 110-4 is assigned to the group 108-1, the topology module 112 may reassess layout and interconnection of the servers 110 through network links within the group 108-1, as described earlier. Thereafter, the topology module 112 may define the layout and the interconnection based on capability of the network links and the servers in executing different types of operations to generate multiple node topology maps.

For generating the multiple node topology maps, the topology module 112 may determine network links and servers 110 from the layout that are capable of performing different operations and include the servers 110 and the network links in different node topology maps. For example, the network links and servers 110 that have capability to execute operations may be analysed and the first node topology map corresponding to the characteristic performance may be generated. Similarly, the topology module 112 may determine the network links and servers 110 with capability in executing operations with minimum latency and generate the second node topology map corresponding to the characteristic latency.

In an implementation, the node topology maps are generated such that the network links and servers 110 capable of executing one type of operation may be included in one node topology map, and network links and servers 110 capable in executing another type of operation may be included in another node topology map. Therefore, an operation may be executed using a particular node topology map, capable to suitably manage the operation with network links and servers efficient in executing the type of operation. Therefore, the operation may be executed in a time and resource efficient manner.

As each node topology map may have resources capable of executing an operation of one type, each node topology map may correspond to a characteristic related to the type of operation. The characteristic may be selected from a set of topology characteristics, such as latency of network links between the servers 110 in the group, bandwidth of communication of the network links, number of network hops associated with the network links, performance of the servers 110, processing time of the servers 110, capability of the servers 110 and latency of the servers 110.

It would be noted that the processing time may be time taken by a server in processing an operation. Further, the latency of the server may be average delay of the server in executing the operation.

In the example, the first node topology map including servers 110-2, and 110-3 as peer servers of the server 110-1, and server 110-4 as peer server of the server 110-3, as described earlier, may be defined to be included in one node topology map, based on performance. Similarly, the second node topology map including the servers 110-2 and 110-3 as peer servers of the server 110-4 and server 110-1 as peer server of server 110-2 may be defined in another node topology map, based on latency.

In an aspect of the present subject matter, the topology module 112 may also determine quality of service parameters associated with the network links and the servers 110 to generate the multiple node topology maps. The multiple node topology maps may be generated such that each node topology map may provide consistent quality of service in executing a corresponding operation.

In an example, the quality of service parameters may include packet loss during transmission of data through the network links, throughput of data transmitted, and jitter associated with the transmission of data, It would be noted that the packet loss may be failure of data packets reaching a destination due to factors such as load on the network links and corrupted data. Further, the throughput may be amount of data transmitted through the network links in a time span and jitter associated with the transmission of data may be variation in delay of transmission of the data packets over the network links.

In an implementation, a node topology map may be a tree like structure that includes different servers 110 as nodes and the interconnections as branches of the tree. In another implementation, the node topology map may be a hierarchical path of servers that includes the servers 110 distributed along a path, the path being utilized for distributing data across the servers 110.

In an implementation, after generating the multiple node topology maps, the topology module 112 may transmit the node topology maps to the servers 110 of the group 108-1. In an example, the topology module 112 may transmit the multiple node topology maps through unicast messages. It would be noted that the unicast message may prevent bulk transmission of data within the data center 104, thereby avoiding security threats such as denial of service attacks.

Since, such network attacks may affect performance of large number of network devices, servers 110 and network links and degrade overall quality of service provided to the users, utilization of unicast messaging may facilitate secure and reliable management of the data center 104 that provides continued and uninterrupted service to the users with consistency.

Each server within the group 108-1 may then perform configuration of network and the network links based on the received node topologies. The configuration may be performed such that the servers 110 can operate within the data center 104 to execute operations by processing data and application for the users based on a selected node topology map.

In an implementation of the present subject matter, the group 108-1 may execute operations based on instructions received from the CMS 102. The operations can be processing of applications and data related to users. In another aspect, the operations can be updating resources of the servers 110 and requesting inventory details from the servers 110,

For assigning an operation to the group 108-1 for execution, the topology module 112 may determine characteristics of the operation such as whether the operation is latency sensitive or performance sensitive. Thereafter, the topology module 112 may select a node topology map to perform the operation.

In an implementation of the present subject matter, the topology module 112 may select a server from the servers 110 corresponding to the node topology map, capable of coordinating the operation across other servers 110 of the group. Further, the server may be capable of managing responses from the other servers 110, and aggregating responses from the other servers 110 and sending the aggregated response to the CMS 102. The server may be selected based on performance parameters, such as processing capability and speed of the server, and may be referred to as interface server hereinafter.

After selecting the node topology map and the interface server, the communication module 306 may send a message for the operation to the interface server. The message, apart from other information, may include an instruction for executing the operation. The interface server may forward the message to other servers 110 in the group for execution as per the node topology map.

In an example, the topology module 112 may select the server 110-1 as the interface server and send the message to the server 110-1. The server 110-1 may forward the message to peer servers 110-2 and 110-3 and the server 110-3 may forward the message to the peer server 110-4 for execution of the operation. In an implementation, servers that receive the message from a server and forwards the message to peer servers may be referred to as intermediate servers. For example, server 110-3 may be an intermediate server as the server 110-3 may receive the message from the server 110-1 and forward the message to peer server 110-4. Thus, the message may be cascaded to reach each server of the group 108-1 and the operation is executed across the servers 110-1, 110-2, 110-3, and 110-4 of the group 108-1 in a scalable manner.

In an implementation, the monitoring module 206 may monitor status of the servers 110 in the group 108-1 and the network links to detect dynamic changes in the network links and the servers 110 during run-time conditions. The monitoring module 206 may detect the dynamic changes based on a change in load, processing capability, latency between the servers 110, and a change in load and performance of the network links. The monitoring module 206, as described earlier, may also monitor the status of the servers in the group for identifying an event. The event may be one of addition of a new server to the group 108-1, removal of an existing server from the group 108-1, a change in interconnection between two servers of the group 108-1, failure of an existing server, a change in grouping information of a server in the group 108-1 by the user.

In an implementation of the present subject matter, upon detecting a change, the topology module 112 may update the multiple node topology maps to generate multiple updated node topology maps. The multiple updated node topology maps may indicate changed interconnection through network links and new or changed servers.

The topology module 112 may then transmit the multiple node topology maps to the affected servers with changed interconnection or new interconnection with another server or changed load and performance of network links associated with the affected servers. The affected servers may then reconfigure network links and their peer servers based on the multiple updated node topology maps.

In the example, the monitoring module 206 may monitor status of the network links to detect the network link between the servers 110-3 and 110-4 of the first node topology map to have increased load and decreased performance. Upon detecting such an event, the monitoring module 206 may reassess capabilities of the servers 110 and the network links within the group 108-1 . Accordingly, the topology module 112 may update the first node topology map to obtain an updated first node topology map.

In the example, the updated first node topology map may include changed interconnections between the servers 110-2, 110-3 and 110-4. Thereafter, the topology module 112 may transmit the updated first node topology map to the servers 110-2, 110-3, and 110-4 for reconfiguring the interconnection between the servers 110-2, 110-3, and 110-4.

In another example, the monitoring module 206 may monitor status of the group 108-1 and detect failure of the server 110-3. The monitoring module 206 may then reassess capabilities of the remaining servers 110-1, 110-2, and 110-4 and the network links within the group 108-1. Thereafter, the topology module 112 may discard the IP address of the server 110-3 from the group 108-1 and update a corresponding node topology map. The topology module 112 may then send the updated node topology map to the servers 110-1, 110-2, and 110-4 for reconfiguration of the remaining servers within the group 108-1.

In an implementation of the present subject matter, the response managing module 310 may receive a response corresponding to the message from the server 110-1. The response may be aggregated response of responses received by the interface server 110-1 from the other servers 110-2, 110-3, and 110-4 corresponding to the message transmitted to perform the operation.

In an implementation of the present subject matter, the response managing module 310 may receive a response from each server of the group 108-1 corresponding to the message sent to each server of the group 108-1. In an aspect of the present subject matter, the sent message may include a listener handler and a response service for receiving multiple responses corresponding to the message.

In another implementation, the response managing module 310 may receive responses from the intermediate servers. Such a response may be a combination of responses received, by an intermediate server, from the peer servers and the response of the intermediate server. For example, the response managing module 310 may receive a response from the server 110-3. The response may be a combination of response received from the peer server 110-4, and response of the server 110-3.

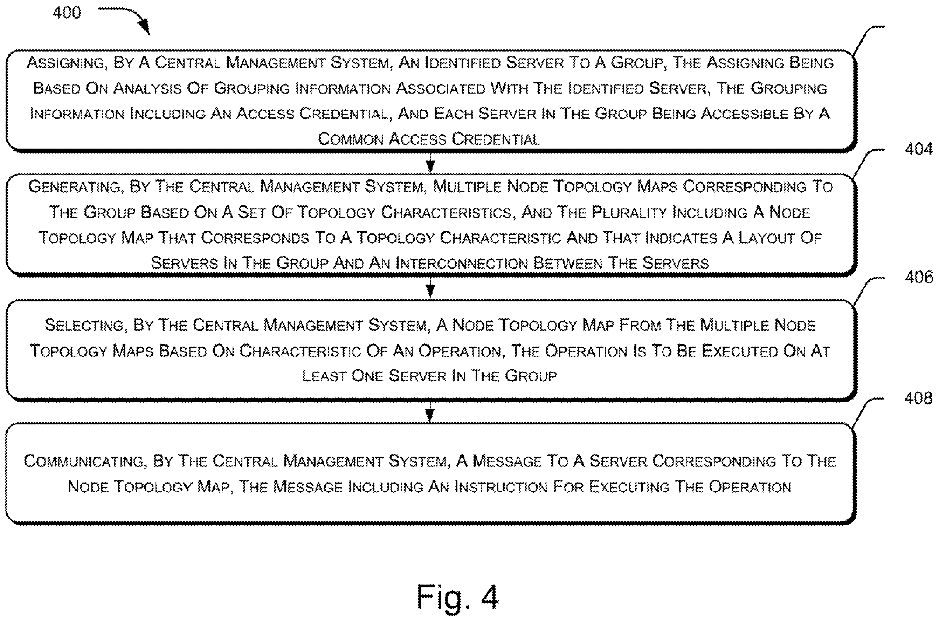

Fig. 4 illustrates a method 400 for managing servers within a group for execution of an operation. The order in which the method 400 is described is not intended to be construed as a limitation, and any number of the described method blocks may be combined in any order to implement the method 400, or an alternative method, Furthermore, the method 400 may be implemented by processor(s) or computing system(s) through any suitable hardware, non-transitory machine readable instructions, or combination thereof.

It may be understood that steps of the method 400 may be performed by programmed computing systems. The steps of the method 400 may be executed based on instructions stored in a non-transitory computer-readable medium, as will be readily understood. The non-transitory computer-readable medium may include, for example, digital memories, magnetic storage media, such as magnetic disks and magnetic tapes, hard drives, or optically readable digital data storage media.

Further, although the method 400 may be implemented in a variety of computing systems of a computing environment; in an example described in Fig. 4, the method 400 is explained in context of the aforementioned Central Management System (CMS) 102, for ease of explanation.

Referring to Fig. 4, in an implementation of the present subject matter, at block 402, a server may be assigned the group based on analysis of grouping information associated with the server. The grouping information may include an access credential associated with the server and each server in the group may be accessible by a common access credential. In an implementation, the analysis may include comparing, by the CMS 102, the grouping information with a predefined grouping policy and then assigning the server to the group based on the comparison

Thereafter, at block 404, multiple node topology maps may be generated for the group based on a set of topology characteristics. The multiple node topology maps may include a node topology map corresponding to a topology characteristic and indicating a layout of servers and interconnection between the servers in the group. In an implementation, the topology module 112 may generate the multiple node topology maps based on the set of topology characteristics and the quality of service parameters. In an example, the topology module 112 may transmit the multiple node topology maps to the servers 110-1, 110-2, 110-3, and 110-4 in the group 108-1,

At block 406, a node topology map may be selected from the multiple node topology maps based on characteristics of an operation. The operation is to be executed on at least one server in the group, In an implementation, the topology module 112 may select the first node topology map based on the characteristics of the operation. Thereafter, at block 408 a message may be transmitted to a server in the group based on the node topology map. It would be noted that the message may include an instruction for execution of the operation. In an implementation, the communication module 306 may transmit the message to the server 110-1 based on the first node topology module.

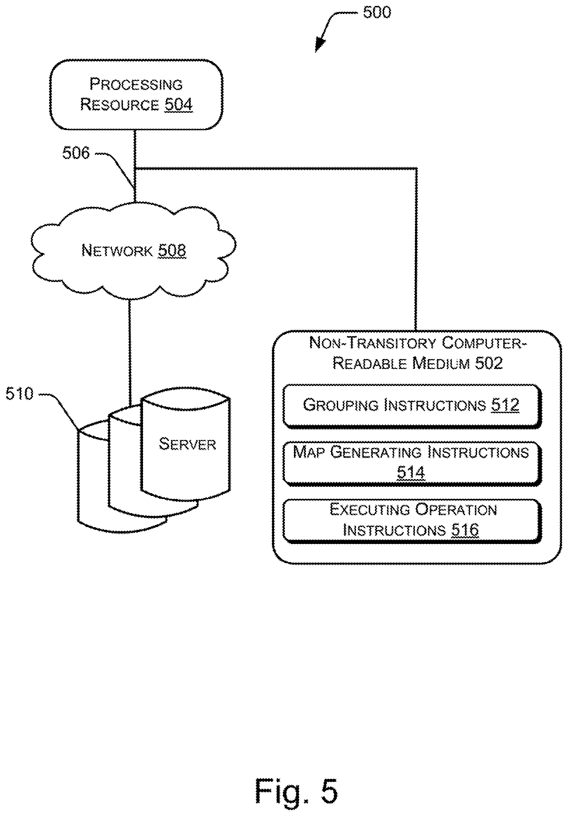

Fig. 5 illustrates a computing environment 500 implementing a non-transitory computer-readable medium 502, according to an implementation of the present subject matter. In one implementation, the non-transitory computer-readable medium 502 may be utilized by a computing device, such as the Central Management System (CMS) 102 (not shown). The CMS 102 may be implemented in a public networking environment or a private networking environment. In one implementation, the computing environment 500 may include a processing resource 504 communicatively coupled to the non-transitory computer-readable medium 502 through a communication link 506 connecting to a network 508.

For example, the processing resource 504 may be implemented in a computing engine, such as the CMS 102 as described earlier. The non-transitory computer-readable medium 502 may be, for example, an internal memory device or an external memory device. In one implementation, the communication link 506 may be a direct communication link, such as any memory read/write interface. In another implementation, the communication link 506 may be an indirect communication link, such as a network interface. In such a case, the processing resource 504 may access the non-transitory computer-readable medium 502 through the network 508. The network 508 may be a single network or a combination of multiple networks and may use a variety of different communication protocols.

The processing resource 504 may be communicating with the network environment 100 over the network 508. Further, the processing resource 504 may communicate with servers 510, over the network 508. In one implementation, the non-transitory computer-readable medium 502 includes a set of computer-readable instructions, such as grouping instructions 512, map generating instructions 514, and executing operation instructions 516. The set of computer-readable instructions may be accessed by the processing resource 504 through the communication link 506 and subsequently executed to process data communicated with the servers 510.

For example, the grouping instructions 512 may be accessed by the processing resource 504 to cluster the servers 510 into multiple groups, In a scenario, the grouping instructions 512 may be utilized to cluster the servers 110-1, 110-2, 110-3 and 110-4 into the group 108-1 based on an access credential associated with each server.

The map generating instructions 514 may be utilized by the processing resource 504 to determine layout and interconnection of the servers 510 in the group. Thereafter, the layout and the interconnection may be defined based on capability of the network links and the servers 510 in executing different types of operations to generate multiple node topology maps.

Further, the map generating instructions 514 may be executed by the processing resource 504 to update the multiple node topology maps to generate multiple updated node topology maps. Also, the map generating instructions may be utilized to assign a characteristic related to a type of operation to a node topology map.

The map generating instructions 514 may also be utilized to store the characteristic information as latency data 312 and bandwidth data 314 in a predefined memory location.

The executing operation instructions 516 may be accessed by the processing resource 504 to generate a message including an instruction to execute an operation and transmit the message to a server in the group. In a scenario, the executing operation instructions 516 may be utilized to transmit the message to the server 110-1 in the group 108-1 for execution of the operation. Thereafter, the server 110-1 may forward the message to other servers 110-2, 110-3, and 110-4 in the group 108-1 for execution of the operation.

Therefore, the described techniques may facilitate an automated and a scalable process of generating multiple node topology maps, selecting a node topology map based on an operation, and executing the operation across servers of a group. Further, the described techniques execute the operation across the servers in a reliable and a resource efficient manner. Also, the described techniques provide a secure way of executing the operation and preventing network attacks thereby ensuring continued service with consistent quality to the users.

Although implementations of present subject matter have been described in language specific to structural features and/or methods, it is to be understood that the present subject matter is defined by the appended claims.

## Claims

1. A method (400) for executing operations across a plurality of servers comprising:
assigning (402), by a central management system, an identified server to a group among a plurality of groups of servers for executing operations across a plurality of servers, the assigning being based on analysis of grouping information associated with the identified server, the grouping information including an access credential associated with the identified server, wherein the access credential associated with the identified server is a common access credential by which each server in the group is accessible, wherein each server has various capabilities in executing operations and wherein each group of servers hosts applications to provide support for a particular type of operations;
generating (404), by the central management system, a plurality of node topology maps corresponding to the group, each node topology map including the servers of the group as nodes and defining interconnections between the servers, the generating being based on a set of topology characteristics, wherein each of the plurality of node topology maps corresponds to a topology characteristic of an operation and indicates an interconnection between the servers in the group, wherein a topology characteristic of an operation is based on the type of resources to be utilized for executing the operation;
selecting (406), by the central management system, a node topology map from the plurality of node topology maps based on characteristic of an operation to be executed, and assigning the operation to be executed to a group of servers for execution; and
communicating (408), by the central management system, a message to a server of the group corresponding to the selected node topology map, the message including an instruction for executing the operation to be executed.

2. The method as claimed in claim 1, wherein the assigning the identified server to the group comprises discovering the identified server based on an identification information associated with the identified server, the identification information including at least one of an internet Protocol, IP, address, and a Media Access Control, MAC, address.

3. The method as claimed in claim 1, wherein the grouping information includes IP address of the identified server, location information of the identified server, proximity of the identified server to other servers, and a user-provided instruction for grouping the identified server.

4. The method as claimed in claim 1, wherein the set of topology characteristics includes at least one of latency of network links between the servers in the group and bandwidth of communication of the network links, performance of the servers, processing time of the servers, latency of the servers and capability of the servers.

5. The method as claimed in claim 4, wherein the node topology map corresponding to latency characteristic is based on latency of the network links and latency of the servers in executing the operation.

6. The method as claimed in claim 4, wherein the node topology map corresponding to performance characteristic is based on performance of the network links and performance of the servers in executing the operation.

7. The method as claimed in claim 1 comprising receiving, by the central management system, an aggregated response corresponding to the message from the server, the aggregated response being a combination of responses received by the server from other servers in the group.

8. The method as claimed in claim 1, wherein each node topology map in the plurality of the node topology maps is transmitted to at least one server in the group by a unicast message.

9. A non-transitory computer-readable medium (502) comprising instructions which, when executed by a processing resource (504) cause said processing resource to:
assign (512) an identified server to a group among a plurality of groups of servers for executing operations across a plurality of services, the assigning being based on analysis of grouping information associated with the identified server, the grouping information including an access credential associated with the identified server, wherein the access credential associated with the identifier servicer is common access credential by which each server in the group is accessible, wherein each server has various capabilities of executing operations and wherein each group of servers hosts applications to provide support for a particular type of operations;
generate (514) a plurality of node topology maps corresponding to the group, each node topology map including the servers of the group as nodes and defining interconnections between the servers, the generating being based on a set of topology characteristics, wherein each of the plurality of node topology maps corresponds to a topology characteristic of an operation and indicates an interconnection between the servers in the group, wherein a topology characteristic of an operation is based on the type of resources to be utilized for executing the operation;
select a node topology map from the plurality of node topology maps based on characteristics of an operation to be executed, and assign the operation to be executed on to a group of servers for execution; and
communicate (516) a message to a server of the group corresponding to the selected node topology map, the message including an instruction for executing the operation to be executed.

10. The non-transitory computer-readable medium as claimed in claim 9, wherein the instructions are to:
monitor status of at least one of the servers in the group and network links between the servers to identify an event, the event corresponding to at least one of addition of a new server to the group, removal of an existing server from the group, a change in interconnection between at least two servers in the group, failure of an existing server, and a change in grouping information of a server in the group, a change in load or processing capability of the servers, and a change in load or performance of the network links;
update, in response to occurrence of the event, a node topology map based on a topology characteristic;
determine at least one affected server from the servers in the group based on the updated node topology map, the at least one affected server having a changed interconnection or a new interconnection with another server in the group; and
transmit the updated node topology map to the at least one affected server in the group by a unicast message.

## Patentansprüche

1. Verfahren (400) zum Ausführen von Vorgängen über mehrere Server hinweg, das Folgendes umfasst:
Zuweisen (402), durch ein zentrales Verwaltungssystem, eines identifizierten Servers zu einer Gruppe unter mehreren Gruppen von Servern zum Ausführen von Vorgängen über mehrere Server hinweg, wobei das Zuweisen auf der Basis einer Analyse von Gruppierungsinformationen erfolgt, die dem identifizierten Server zugeordnet sind, wobei die Gruppierungsinformationen einen Zugangsnachweis beinhalten, der dem identifizierten Server zugeordnet ist, wobei der Zugangsnachweis, der dem identifizierten Server zugeordnet ist, ein gemeinsamer Zugangsnachweis ist, durch den jeder Server in der Gruppe zugänglich ist, wobei jeder Server verschiedene Fähigkeiten zum Ausführen von Vorgängen aufweist und wobei jede Gruppe von Servern Anwendungen dazu hostet, Unterstützung für eine spezielle Art von Vorgängen bereitzustellen;
Erzeugen (404), durch das zentrale Verwaltungsystem, mehrerer Knotentopologiekarten, die der Gruppe entsprechen, wobei jede Knotentopologiekarte die Server der Gruppe als Knoten beinhaltet und Zusammenschaltungen zwischen den Servern definiert, wobei das Erzeugen auf der Basis eines Satzes von Topologiemerkmalen erfolgt, wobei jede der mehreren Knotentopologiekarten einem Topologiemerkmal eines Vorgangs entspricht und eine Zusammenschaltung zwischen den Servern in der Gruppe anzeigt, wobei ein Topologiemerkmal eines Vorgangs auf der Basis der Art der Ressourcen erfolgt, die zum Ausführen des Vorgangs zu nutzen ist;
Auswählen (406), durch das zentrale Verwaltungssystem, einer Knotentopologiekarte aus den mehreren Knotentopologiekarten auf der Basis des Merkmals eines auszuführenden Vorgangs und Zuweisen des auszuführenden Vorgangs zu einer Gruppe von Servern für eine Ausführung; und
Kommunizieren (408), durch das zentrale Verwaltungssystem, einer Nachricht an einen Server der Gruppe, die der ausgewählten Knotentopologiekarte entspricht, wobei die Nachricht eine Anweisung zum Ausführen des auszuführenden Vorgangs beinhaltet.

2. Verfahren nach Anspruch 1, wobei das Zuweisen des identifizierten Servers zu der Gruppe ein Erkennen des identifizierten Servers auf der Basis von Identifikationsinformationen umfasst, die dem identifizierten Server zugeordnet sind, wobei die Identifikationsinformationen eine Internetprotokoll(IP)-Adresse und/oder eine Medienzugangskontrollen(*Media Access Control -* MAC)-Adresse beinhalten.

3. Verfahren nach Anspruch 1, wobei die Gruppierungsinformationen eine IP-Adresse des identifizierten Servers, Standortinformationen des identifizierten Servers, eine Nähe des identifizierten Servers zu anderen Servern und eine von einem Benutzer bereitgestellte Anweisung zum Gruppieren des identifizierten Servers beinhalten.

4. Verfahren nach Anspruch 1, wobei der Satz von Topologiemerkmalen eine Latenz von Netzwerkverknüpfungen zwischen den Servern in der Gruppe und der Kommunikationsbandbreite der Netzwerkverknüpfungen, eine Leistung der Server, eine Verarbeitungszeit der Server, eine Latenz der Server und/oder eine Fähigkeit der Server beinhaltet.

5. Verfahren nach Anspruch 4, wobei die Knotentopologiekarte, die einem Latenzmerkmal entspricht, auf der Basis einer Latenz der Netzwerkverknüpfungen und einer Latenz der Server beim Ausführen des Vorgangs erfolgt.

6. Verfahren nach Anspruch 4, wobei die Knotentopologiekarte, die einem Leistungsmerkmal entspricht, auf der Basis einer Leistung der Netzwerkverknüpfungen und einer Leistung der Server beim Ausführen des Vorgangs erfolgt.

7. Verfahren nach Anspruch 1, das ein Empfangen, durch das zentrale Verwaltungssystem, einer aggregierten Antwort umfasst, die der Nachricht von dem Server entspricht, wobei die aggregierte Antwort eine Kombination von Antworten ist, die durch den Server von anderen Servern in der Gruppe empfangen werden.

8. Verfahren nach Anspruch 1, wobei jede Knotentopologiekarte in den mehreren Knotentopologiekarten an wenigstens einen Server in der Gruppe durch eine Unicast-Nachricht übertragen wird.

9. Nichtflüchtiges computerlesbares Medium (502), das Anweisungen umfasst, die, wenn sie durch eine Verarbeitungsressource (504) ausgeführt werden, die Verarbeitungsressource zu Folgendem veranlassen:
Zuweisen (512) eines identifizierten Servers zu einer Gruppe unter mehreren Gruppen von Servern zum Ausführen von Vorgängen über mehrere Dienste hinweg, wobei das Zuweisen auf der Basis einer Analyse von Gruppierungsinformationen erfolgt, die dem identifizierten Server zugeordnet sind, wobei die Gruppierungsinformationen einen Zugangsnachweis beinhalten, der dem identifizierten Server zugeordnet ist, wobei der Zugangsnachweis, der dem Identifizierer-Dienstleister zugeordnet ist, ein gemeinsamer Zugangsnachweis ist, durch den jeder Server in der Gruppe zugänglich ist, wobei jeder Server verschiedene Fähigkeiten zum Ausführen von Vorgängen aufweist und wobei jede Gruppe von Servern Anwendungen dazu hostet, Unterstützung für eine spezielle Art von Vorgängen bereitzustellen;
Erzeugen (514) mehrerer Knotentopologiekarten, die der Gruppe entsprechen, wobei jede Knotentopologiekarte die Server der Gruppe als Knoten beinhaltet und Zusammenschaltungen zwischen den Servern definiert, wobei das Erzeugen auf der Basis eines Satzes von Topologiemerkmalen erfolgt, wobei jede der mehreren Knotentopologiekarten einem Topologiemerkmal eines Vorgangs entspricht und eine Zusammenschaltung zwischen den Servern in der Gruppe anzeigt, wobei ein Topologiemerkmal eines Vorgangs auf der Basis der Art der Ressourcen erfolgt, die zum Ausführen des Vorgangs zu nutzen ist;
Auswählen einer Knotentopologiekarte aus den mehreren Knotentopologiekarten auf der Basis von Merkmalen eines auszuführenden Vorgangs und Zuweisen des auszuführenden Vorgangs zu einer Gruppe von Servern für eine Ausführung; und
Kommunizieren (516) einer Nachricht an einen Server der Gruppe, die der ausgewählten Knotentopologiekarte entspricht, wobei die Nachricht eine Anweisung zum Ausführen des auszuführenden Vorgangs beinhaltet.

10. Nichtflüchtiges computerlesbares Medium nach Anspruch 9, wobei die Anweisungen zu Folgendem dienen:
Überwachen des Status wenigstens eines der Server in der Gruppe und der Netzwerkverknüpfungen zwischen den Servern, um ein Ereignis zu identifizieren, wobei das Ereignis einem Hinzufügen eines neuen Servers zu der Gruppe, einem Entfernen eines vorhandenen Servers aus der Gruppe, einer Änderung der Zusammenschaltung zwischen wenigstens zwei Servern in der Gruppe, einem Ausfall eines vorhandenen Servers und einer Änderung von Gruppierungsinformationen eines Servers in der Gruppe, einer Änderung einer Belastung oder Verarbeitungsfähigkeit der Server und/oder einer Änderung einer Belastung oder einer Leistung der Netzwerkverknüpfungen entspricht;
Aktualisieren, als Reaktion auf ein Auftreten des Ereignisses, einer Knotentopologiekarte auf der Basis eines Topologiemerkmals;
Bestimmen wenigstens eines betroffenen Servers aus den Servern in der Gruppe auf der Basis der aktualisierten Knotentopologiekarte, wobei der wenigstens eine betroffene Server eine geänderte Zusammenschaltung oder eine neue Zusammenschaltung mit einem anderen Server in der Gruppe aufweist; und
Übertragen der aktualisierten Knotentopologiekarte an den wenigstens einen betroffenen Server in der Gruppe durch eine Unicast-Nachricht.

## Revendications

1. Procédé (400) destiné à l'exécution d'opérations sur une pluralité de serveurs comprenant :
l'attribution (402), par un système de gestion central, d'un serveur identifié à un groupe parmi une pluralité de groupes de serveurs afin d'exécuter des opérations sur une pluralité de serveurs, l'attribution étant basée sur l'analyse d'informations de regroupement associées au serveur identifié, les informations de regroupement comportant un authentifiant d'accès associé au serveur identifié, l'authentifiant d'accès associé au serveur identifié étant un authentifiant d'accès commun par lequel chaque serveur dans le groupe est accessible, chaque serveur ayant diverses capacités d'exécution d'opérations et chaque groupe de serveurs hébergeant des applications afin de fournir une prise en charge pour un type d'opérations particulier ;
la génération (404), par le système de gestion central, d'une pluralité de cartes topologiques de nœuds correspondant au groupe, chaque carte topologique de nœuds comportant les serveurs du groupe en tant que nœuds et définissant des interconnexions entre les serveurs, la génération étant basée sur un ensemble de caractéristiques topologiques, chacune de la pluralité de cartes topologiques de nœuds correspondant à une caractéristique topologique d'une opération et indiquant une interconnexion entre les serveurs dans le groupe, une caractéristique topologique d'une opération étant basée sur le type de ressources à utiliser afin d'exécuter l'opération ;
la sélection (406), par le système de gestion central, d'une carte topologique de nœuds parmi la pluralité de cartes topologiques de nœuds sur la base d'une caractéristique d'une opération à exécuter, et l'attribution de l'opération à exécuter à un groupe de serveurs pour son exécution ; et
la communication (408), par le système de gestion central, d'un message à un serveur du groupe correspondant à la carte topologique de nœuds sélectionnée, le message comportant une instruction afin d'exécuter l'opération à exécuter.

2. Procédé selon la revendication 1, dans lequel l'attribution du serveur identifié au groupe comprend la découverte du serveur identifié sur la base des informations d'identification associées au serveur identifié, les informations d'identification comportant une adresse de protocole Internet, IP, et/ou une adresse de commande d'accès au support, MAC.

3. Procédé selon la revendication 1, dans lequel les informations de regroupement comportent l'adresse IP du serveur identifié, des informations d'emplacement du serveur identifié, la proximité du serveur identifié par rapport à d'autres serveurs et une instruction fournie par l'utilisateur afin de regrouper le serveur identifié.

4. Procédé selon la revendication 1, dans lequel l'ensemble de caractéristiques topologiques comporte la latence des liaisons réseau entre les serveurs dans le groupe et la bande passante de communication des liaisons réseau, et/ou les performances des serveurs, et/ou le temps de traitement des serveurs, et/ou la latence des serveurs, et/ou la capacité des serveurs.

5. Procédé selon la revendication 4, dans lequel la carte topologique de nœuds correspondant à la caractéristique de latence est basée sur la latence des liaisons réseau et la latence des serveurs lors de l'exécution de l'opération.

6. Procédé selon la revendication 4, dans lequel la carte topologique de nœuds correspondant à la caractéristique de performance est basée sur les performances des liaisons réseau et les performances des serveurs lors de l'exécution de l'opération.

7. Procédé selon la revendication 1, comprenant la réception, par le système de gestion central, d'une réponse agrégée correspondant au message du serveur, la réponse agrégée étant une combinaison de réponses reçues par le serveur d'autres serveurs dans le groupe.

8. Procédé selon la revendication 1, dans lequel chaque carte topologique de nœuds dans la pluralité des cartes topologiques de nœuds est transmise à au moins un serveur dans le groupe par un message de monodiffusion.

9. Support non transitoire lisible par ordinateur (502) comprenant des instructions qui, lorsqu'elles sont exécutées par une ressource de traitement (504), amènent ladite ressource de traitement à :
attribuer (512) un serveur identifié à un groupe parmi une pluralité de groupes de serveurs afin d'exécuter des opérations sur une pluralité de services, l'attribution étant basée sur l'analyse des informations de regroupement associées au serveur identifié, les informations de regroupement comportant un authentifiant d'accès associé au serveur identifié, l'authentifiant d'accès associé au prestataire de services d'identifiant étant un authentifiant d'accès commun par lequel chaque serveur dans le groupe est accessible, chaque serveur ayant diverses capacités d'exécution d'opérations et chaque groupe de serveurs hébergeant des applications afin de fournir une prise en chargepour un type d'opérations particulier ;
générer (514) une pluralité de cartes topologiques de nœuds correspondant au groupe, chaque carte topologique de nœuds comportant les serveurs du groupe en tant que nœuds et définissant des interconnexions entre les serveurs, la génération étant basée sur un ensemble de caractéristiques topologiques, chacune de la pluralité des cartes topologiques de nœuds correspondant à une caractéristique topologique d'une opération et indiquant une interconnexion entre les serveurs dans le groupe, une caractéristique topologique d'une opération étant basée sur le type de ressources à utiliser afin d'exécuter l'opération ;
sélectionner une carte topologique de nœuds dans la pluralité de cartes topologiques de nœuds sur la base des caractéristiques d'une opération à exécuter, et attribuer l'opération à exécuter à un groupe de serveurs pour son exécution ; et
communiquer (516) un message à un serveur du groupe correspondant à la carte topologique de nœuds sélectionnée, le message comportant une instruction afin d'exécuter l'opération à exécuter.

10. Support non transitoire lisible par ordinateur selon la revendication 9, dans lequel les instructions doivent :
surveiller l'état d'au moins l'un des serveurs dans le groupe et des liaisons réseau entre les serveurs afin d'identifier un événement, l'événement correspondant à l'ajout d'un nouveau serveur au groupe, et/ou la suppression d'un serveur existant du groupe, et/ou la modification de l'interconnexion entre au moins deux serveurs dans le groupe, et/ou la défaillance d'un serveur existant, et/ou la modification des informations de regroupement d'un serveur dans le groupe, et/ou la modification de la charge ou de la capacité de traitement des serveurs, et/ou la modification de la charge ou des performances des liaisons réseau ;
mettre à jour, en réponse à l'occurrence de l'événement, une carte topologique de nœuds sur la base d'une caractéristique topologique ;
déterminer au moins un serveur affecté parmi les serveurs dans le groupe sur la base de la carte topologique de nœuds mise à jour, l'au moins un serveur affecté ayant une interconnexion modifiée ou une nouvelle interconnexion avec un autre serveur dans le groupe ; et
transmettre la carte topologique de nœuds mise à jour à l'au moins un serveur affecté dans le groupe par un message de monodiffusion.
